# EUROPEAN PATENT APPLICATION

(11) **EP 1 757 806 A1**
(43) Date of publication of application: **28.02.2007**
(21) Application number: 05743760.0
(22) Date of filing: 25.05.2005
(51) Int. Cl.: F03D 11/00, F03D 3/06

(54) **BLADE FOR VERTICAL SHAFT WIND WHEEL AND VERTICAL SHAFT WIND WHEEL**

(30) Priority: 27.05.2004 JP 2004157868; 10.11.2004 JP 2004326598
(71) Applicant: Intellectual Property Bank Corp., Tokyo 105-0001 (JP)
(72) Inventor: YOKOI, Tadashi, 2610011 (JP)
(74) Representative: Rees, Alexander Ellison
(86) International application number: PCT/JP2005/009538
(87) International publication number: WO 2005/116446

(57) **Abstract**

A vertical axis wind turbine capable of rotating at a high velocity after starting to rotate while keeping its self-startability high in starting to rotate is provided. The vertical axis wind turbine 10 has airfoil blades with cutouts 19 in the airfoil-shaped lower surfaces of the blades and boundary-layer reattachment portions in a convex shape projecting outward from the maximum cutout depth points in the cutouts 19 toward the trailing edge sides of the blades 18. For example, the maximum depth h of the cutout 19 is determined to 0.2t≦h≦0.7t relative to the maximum thickness of the blade t in the blade section, and the boundary-layer reattachment portion 19a is formed in a convex shape projecting outward from the maximum cutout depth point h in the cutout toward the trailing edge side of the blade 18. It is desirable to form the cutout having a cutout starting point at the position of 0.45C to 0.7C from the leading edge of the blade 18 having a blade chord length C and a cutout end point at the position of 0.15C to 0.35C from the trailing edge of the blade 18.

## Description

### TECHNICAL FIELD

This invention relates to a starting mechanism for a lift type wind vertical axis having turbine symmetrical airfoil or asymmetrical airfoil type blades.

### BACKGROUND ART

Conventionally, there has been known a wind turbine for wind power generation, which is provided with blades of an airfoil type having a low Reynolds number and high lift coefficient and has a cutout formed in the lower surface of each blade.

The aforesaid wind turbine for wind power generation is regarded to be rotated with high efficiency even by the wind coming from any direction at any wind speed, specifically even when starting or in a weak wind field, since it has an effective combination of the characteristics of a drag type wind turbine and a lift type wind turbine. (cf. Patent Literature 1)

Meanwhile, there has been known that, when the flow path of the wind is abruptly widened due to a level difference (referred to as "backward-facing step flow"), boundary-layer separation by the level difference occurs, but the separated boundary layer is reattached at a certain distance. (cf. Non-Patent Literature 1, Non-Patent Literature 2, Non-Patent Literature 3, Non-Patent Literature 4 and Non-Patent Literature 5)
[Patent Literature 1] Japanese Patent Application Publication No. 2004-108330(A) (Pages 1-5 and Figs. 1-4)
[Non-Patent Literature 1] Chiharu FUKUSHIMA and three others, "Experimental investigation on inclined backward-facing step flow (reattachment region)", Collected papers of lecture meeting of the Fluids Engineering Division, Japan Society of Mechanical Engineers, September 19,2003.
[Non-Patent Literature 2] Internet website ofTohoku Gakuin University, "Understanding of flow by using an adequate optical effect", Browsed April 15, 2004 <http://www.mech.tohoku-gakuin.ac jp/simlab/cysim/study/flowvis.html>
[Non-Patent Literature 3] Satoshi Shinohara and two others, Internet website of The Faculty of Environmental Science and Technology of Okayama University, "Numerical fluid analysis of flow on a complicated object surface", browsed April 15, 2004 <http://www.civil.okayama-u.ac.jp/~analysis/gakkai/sinohara.pdf>
[Non-Patent Literature 4] "JSME Mechanical Engineers' Handbook", New Edition published April 15, 1987 by Japan Society of Mechanical Engineers, Pages A5-43 to A5-44
[Non-Patent Literature 5] Internet website of Fuji Research Institute Corporation, "Back-step Flow - Simulation Results", browsed April 15, 2004 <http://wwwfuji-ric.co jp/prom/fukuzatsu/Iga/result/bsresult.html>

### DISCLOSURE OF THE INVENTION

### PROBLEMS TO BE SOLVED BY THE INVENTION

The wind turbine for wind power generation disclosed in Patent Literature 1 is regarded to be rotated with high efficiency even by the wind coming from any direction at any wind speed, specifically even when starting or in a weak wind field, since it has an effective combination of the characteristics of a drag type wind turbine and a lift type wind turbine.

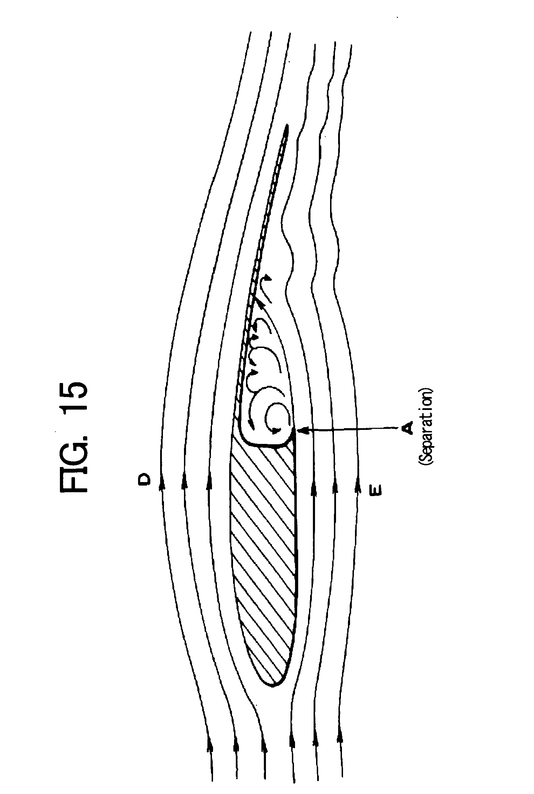

FIG 15 is a diagram showing air current around a conventional blade. As shown in FIG 15, the conventional airfoil type blade has a large level difference formed by a cutout in the lower surface of the blade, so that it is liable to cause a vortex flow in the cutout groove during rotation, which is detrimental to the lift-drag ratio of the blade, consequently to make reattachment of the separated boundary layer due to the vortex flow. As a result, the conventional blade has a high probability of entailing a disadvantage such that a desirable flux flow cannot be formed because of occurrence of a lifting force, to worsen the performance of the output produced when the blades revolve.

Even if the boundary layer is reattached, the flow consequently collides with the inclined plane of the blade because the reattached surface is slightly curved upward when seen from the upstream side. Hence, the flow at the reattached point cannot smoothly turn in direction, consequently to cause a turbulent flow or vortex due to the collision of the flow. As a result, this has a high probability of entailing a disadvantage such that the performance of the output of the wind turbine is remarkably deteriorated because of drop in the lifting force and increase in drag.

Besides, as the conventional blade is formed by bending a thin plate into a streamline shape, it is disadvantageously weak in strength.

Also, a conventional Savonius wind turbine has suffered a disadvantage such that, when it rotates with a circumferential velocity ratio (blade tip velocity/wind velocity) of 1 or more, a rotating moment for rotating the wind turbine at a higher velocity cannot be produced whereas it is of a drag type, so that the wind turbine cannot be rewed up any further even if the wind is picking up.

A hybrid type wind turbine having the characteristic features of the Savonius wind turbine and Darius wind turbine is complicated in structure, thus to involve an immense amount of time and effort to manufacture. Moreover, it has entailed a disadvantage of a low output coefficient because a drag force exerted in the opposite direction to the rotation of the drag type wind turbine when the blades rotate at high velocities of circumferential velocity ratio of more than 1.

The present invention was made in consideration of such situations as described above and seeks to provide blades for a vertical axis wind turbine with a low drag force by decreasing cutouts in the blades to a bare minimum to suppress generation of a vortex flow. Further, the present invention seeks to provide a vertical axis wind turbine capable of rotating at high velocities while maintaining self-startability even just after starting rotating, by suppressing air-flow distortions caused by boundary-layer separation around the blades.

### MEANS OF SOLVING THE PROBLEMS

In order to solve the problems described above, the present invention is featured by providing a cutout in the airfoil-shaped ventral surface or back surface of the blade of the vertical axis wind turbine and forming a boundary-layer reattachment portion in a convex shape projecting outward from the maximum cutout depth point in the cutout toward the trailing edge side of the blade.

Further, in order to solve the problems described above, the present invention is featured by providing a cutout in the airfoil-shaped ventral surface or back surface of the blade having the maximum blade thickness t of a vertical axis wind turbine, which maximum blade depth of the cutout is set to 0.2t to 0.7t, and forming a boundary-layer reattachment portion in a convex shape projecting outward from the maximum cutout depth point in the cutout toward the trailing edge side of the blade.

Further, in order to solve the problems described above, the present invention is featured by providing a cutout having a starting point at the position of 0.45C to 0.7C from the leading edge of the blade in the airfoil-shaped ventral surface or back surface of the blade having a blade chord length C of a vertical axis wind turbine, and forming a boundary-layer reattachment portion in a convex shape projecting outward from the maximum cutout depth point in the cutout toward the trailing edge side of the blade.

Further, in order to solve the problems described above, the present invention is featured by providing a cutout having a cutout end point at the position of 0.15C to 0.35C from the trailing edge of the blade in the airfoil-shaped ventral surface or back surface of the blade having a blade chord length C of a vertical axis wind turbine, and forming a boundary-layer reattachment portion in a convex shape projecting outward from the maximum cutout depth point in the cutout toward the trailing edge side of the blade.

Further, in order to solve the problems described above, the present invention is featured by a blade of a vertical axis wind turbine, which is composed of a low-speed blade portion having a cutout in the airfoil-shaped ventral surface or back surface of the blade and a normal high-speed blade portion having no cutout.

Further, in order to solve the problems described above, the present invention is featured in that blades of a vertical axis wind turbine are composed of low-speed blade portions having cutouts in the airfoil-shaped ventral surfaces or back surfaces of the blades and boundary-layer reattachment portions projecting outward from the maximum cutout depth points in the cutouts toward the trailing edge sides of the blades, and normal high-speed blade portions having no cutout.

### EFFECT OF THE INVENTION

According to the present invention, since the blades are featured by providing the cutouts in the airfoil-shaped ventral surfaces or back surfaces of the blades of the vertical axis wind turbine and forming the boundary-layer reattachment portions projecting outward from the maximum cutout depth points in the aforementioned cutouts toward the trailing edge sides of the blades, drag force exerted on the blades is increased by the following wind blowing from the blade trailing edge into the deep part of the cutout, consequently to increase the self-startability of the wind turbine when starting to rotate, and when the wind enters through the leading edge after increasing the wind velocity up to the circumferential velocity ratio of more than 1, the boundary layer of the air current, which is separated at the cutout starting point, is reattached to the blade surface while the flow turns very slowly in direction at very slow speed, thereby to provide a lifting performance close to that of a regular airfoil having no cutout.

Further, since the blades according to the present invention are featured by providing the cutouts in the airfoil-shaped ventral surfaces or back surfaces of the blades having the maximum blade thickness t set to 0.2t to 0.7t and forming the boundary-layer reattachment portions projecting outward from the maximum cutout depth points in the aforementioned cutouts toward the trailing edge sides of the blades, the output coefficient increasing with the size of the cutout can be prevented from decreasing when the circumferential velocity ratio becomes 1 or more to function the wind turbine as a lift type wind turbine, while producing a drag force at the cutout by the following wind.

Further, since the blades according to the present invention are featured by providing the cutouts having cutout starting points at the positions of 0.45C to 0.7C from the starting points of the blades in the airfoil-shaped ventral surfaces or back surfaces of the blades having a blade chord length C of the vertical axis wind turbine and forming the boundary-layer reattachment portions projecting outward from the maximum cutout depth points in the aforementioned cutouts toward the trailing edge sides of the blades, a wide area for retaining the blades and support arms therefor can be assured while maintaining the lift-drag ratio of the blades.

Further, since the blades according to the present invention are featured by providing the cutouts having cutout end points at the positions of 0.15C to 0.35C from the trailing edges of the blades in the airfoil-shaped ventral surfaces or back surfaces of the blades having a blade chord length C of the vertical axis wind turbine and forming the boundary-layer reattachment portions projecting outward from the maximum cutout depth points in the cutouts toward the trailing edge sides of the blades, a normal blade surface is left on the trailing edge portion of the blade to bring the ventral flow near the trailing edge of the blade close to a regular flow condition on the blade having no cutout, so that the performance of the wind turbine of the invention can be brought close to the intrinsic lifting performance of a standard airfoil blade.

Further, since the blades according to the present invention are featured in that the blades of the vertical axis wind turbine are composed of the low-speed blade portions having the cutouts in the airfoil-shaped ventral surfaces or back surfaces of the blades and the normal high-speed blade portions having no cutout, there can be provided the wind turbine capable of easily starting to rotate by the drag force generated at the cutouts in the low-speed blade portions and having a high output coefficient by the lifting force generated by the air current along the regular airfoil surface having no cutout in the case of the circumferential velocity ratio of 1 or more.

Further, since the blades according to the present invention are featured in that the blades of the vertical axis wind turbine are composed of the low-speed blade portions having the cutouts in the airfoil-shaped ventral surfaces or back surfaces of the blades and the boundary-layer reattachment portions projecting outward from the maximum cutout depth points in the cutouts toward the trailing edge sides of the blades and the normal high-speed blade portions having no cutout, there can be provided the wind turbine capable of easily starting to rotate by the drag force generated at the cutouts in the low-speed blade portions and having a high output coefficient by the lifting force generated by the air current along the regular airfoil surface having no cutout in the case of the circumferential velocity ratio of 1 or more. Furthermore, the invention can provide the wind turbine having a high output coefficient by the lifting force generated by the air current along the regular airfoil surface having no cutout in the case of the circumferential velocity ratio of 1 or more.

### BRIEF DESCRIPTION OF THE DRAWINGS

FIG. 1 is an external perspective view of a vertical axis wind turbine of the invention.
FIG 2 is a cross section of the vertical axis wind turbine of the invention.
**FIG 3** shows an airfoil section of a low-speed blade portion in the invention.
FIG 4 is a diagram illustrating the state of the low-speed blade portion with its trailing edge side to the following wind Wb in the invention.
FIG 5 is a diagram illustrating the state of the air current by the opposing wind Wf running backward from the leading edge of the low-speed blade portion.
FIG 6 is a diagram illustrating the air current around the airfoil surface of the blade.
FIG 7 is a diagram illustrating the air current running along the low-speed blade portion at a low wind velocity of the opposing wind Wf.
FIG 8 is a diagram illustrating the air current running along the low-speed blade portion at a high wind velocity of the opposing wind Wf.
FIG 9 shows the relation between the output coefficient of the vertical axis wind turbine and the starting wind velocity with relation to the percentage of the low-speed blade portion of the invention.
FIG 10 is a view showing the airfoil section of the low-speed blade portion having a straight portion on a boundary-layer reattachment portion of the blade of the invention.
FIG 11 is a view showing the airfoil section of the low-speed blade portion having no straight portion on a boundary-layer reattachment portion of the blade of the invention.
FIG 12 is a sectional view showing the blade having a cutout in the back side of a symmetrical airfoil blade of the invention.
FIG 13 is a view showing the state in which the blade having the cutout in the back side of a symmetrical airfoil blade of the invention produces a starting torque.
FIG 14 is a sectional view taken in the central span direction of the blade 18 having the low-speed blade portion of the invention.
FIG 15 is a view showing the air current around a conventional blade.

### EXPLANATION OF REFERENCE NUMERALS

- 8: Pole
- 10: Vertical axis wind turbine
- 12: Attachment part
- 14: Inner race side stationary shaft
- 16: Power generator
- 17: Outer race side rotor
- 18: Blade
- 18a: Low-speed blade portion
- 18b: High-speed blade portion
- 19: Cutout
- 19a: Boundary-layer reattachment portion
- 20: Support arm
- 22: Outer race sleeve
- 24: Torque transmission cap
- 26: Speed-increasing means
- 28: Coupling
- 29: Power line
- 30a, 30b, 30c: Bearings
- 80,81,82: Hubs
- a: Cutout starting point
- b: Cutout end point
- c: Blade chord length
- d: Back surface
- e: Ventral surface
- f: Boundary-layer reattachment point

### BEST MODE FOR CARRYING OUT THE INVENTION

The structures of vertical axis wind turbine blades and vertical axis wind turbine will be described hereinafter. A first embodiment of the vertical axis wind turbine blades and the vertical axis wind turbine will be described.

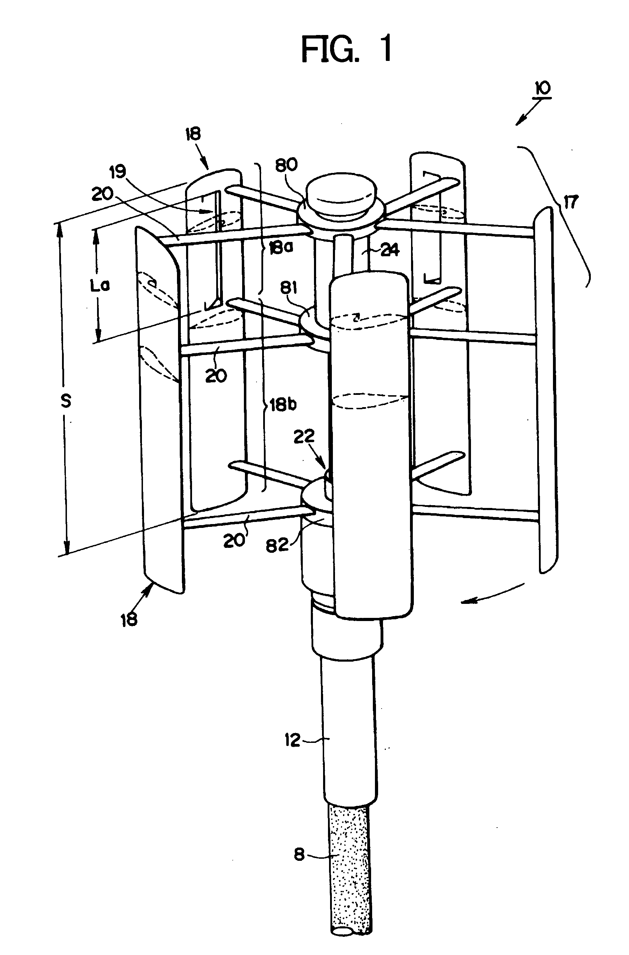

FIG 1 is an external perspective view of a vertical axis wind turbine of the invention. As shown in FIG 1, the vertical axis wind turbine 10 comprises an attachment part 12 for attaching the vertical axis wind turbine 10 to an electric pole or other pole 10, and an outer race side rotor 17 rotatable relative to the attachment part 12.

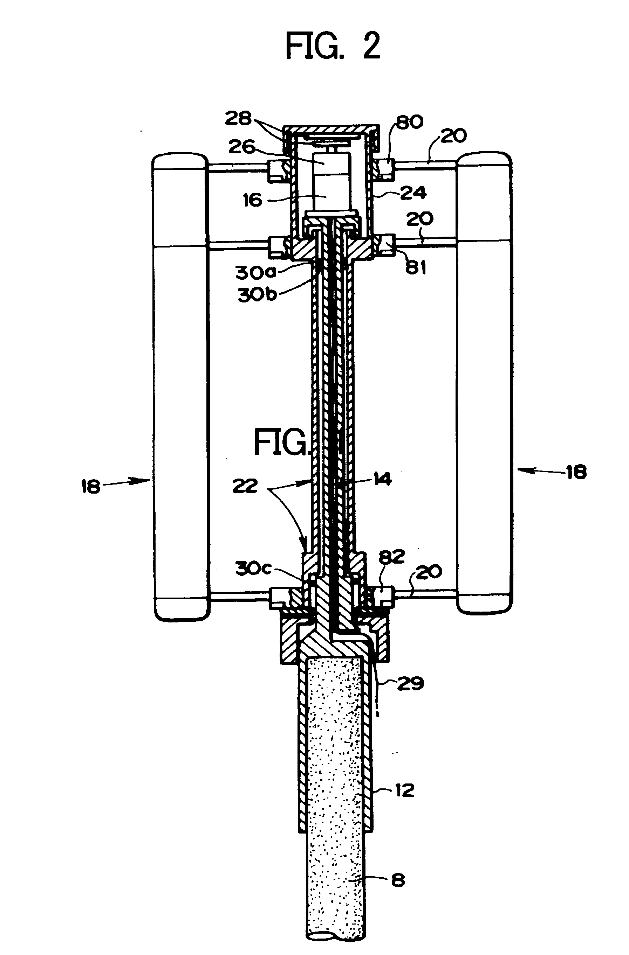

The outer race side rotor 17 is provided with blades 18 for converting the wind force into a lifting force to generate a rotational torque, support arms 20 for retaining the blades at the upper, middle and lower points and having a streamline cross section to generate the lifting force, upper, middle and lower hubs 80, 81 and 82 connected to an outer race sleeve 22 serving as a rotating shaft of the outer race side rotor 17 to retain each support arm 20, and a torque transmission cap 24 for transmitting the rotational torque from the hubs 80 and 81 to a power generator 16 (see FIG 2). Although the five blades 18 is attached to the outer race side rotor 17 in the illustrated embodiment, the number of the blades 18 may be two, three or four.

As shown in FIG 1, the blade 18 is formed of a low-speed blade portion 18a with an cutout 19 in the airfoil-shaped ventral surface or back surface of the blade so as to produce a drag force by the following wind in a range of low circumferential velocity ratio to gain a high output coefficient, and a high-speed blade portion 18b having an airfoil section (normal airfoil section having no cutout 19) capable of gaining the high output coefficient in a range of high circumferential velocity ratio.

Since the wind turbine of the invention is provided with the high-speed blade portion 18b having an airfoil section to serve as a drag type wind turbine by the following wind with a circumferential velocity ratio of 1 or less, the startability of the outer race side rotor 17 of the vertical axis wind turbine 10 can be improved. By adjusting the maximum depth h of the cutout formed in the low-speed blade portion 18a and the length La of the low-speed blade portion 18a, the blade can be designed with emphasis on a low wind velocity when starting to rotate or large output coefficient, or on the basis of the optimal structure capable of striking a balance between the aforementioned two characteristic features over an allowable level.

FIG 2 shows the cross section of the vertical axis wind turbine of the invention. As shown in FIG 2, the vertical axis wind turbine 10 has a cantilevered inner race side stationary shaft 14 for rotatably supporting the outer race sleeve 22 through bearings 30a, 30b and 30c. On the open end side of the cantilevered inner race side stationary shaft 14, an electric power generator 16 is mounted. With the structure as above, a rotational torque is generated on the blades 18 by the wind hitting the blades 18 and transmitted to the hubs 80, 81 and 82 through the support arms 20. The rotational torque given to the hubs 80, 81 and 82 is transmitted to the rotating shaft of the power generator 16 through the torque transmission cap 24, coupling 28 and speed-increasing means 26 to generate electricity. In the illustrated embodiment, a noncontact type magnetic coupling is used as the coupling 28.

Specifically, the magnetic coupling can transmit the rotational torque to the speed-increasing means 26 while keeping a distance interspatially without bringing the coupling disc into direct contact with a coupling mechanism, because it provides high tolerance for center displacement between the input and output shafts of the coupling. Thus, the magnetic coupling makes it possible to almost completely transmit the rotational torque without overloading the bearings of the torque transmission cap 24, speed-increasing means and power generator due to a reactive force caused by the center displacement.

The inner race side stationary shaft 14 in the embodiment shown in FIG 2 is immovably secured on the pole 8 by means of the attachment part 12. Thus, the inner race side stationary shaft 14 can easily be so designed as to have a large section of a small section modulus to be less flexible. Therefore, the inner race side stationary shaft 14 can be made hollow, so that wiring such as of a power line 29 for electrical connection to the power generator 16 and various control line can be installed within the hollow stationary shaft 14.

In many instances, the conventional vertical shaft wind turbine has the power mounted beneath a wind turbine rotor so as to transmit the rotational torque from the wind turbine rotor to the power generator through a torque transfer gear mechanism. However, the structure in which the rotor is placed on the outer race side as shown in FIG 2 allows the cantilevered inner race side stationary shaft 14 to penetrate to the upper portion of the outer race side rotor 17, so that the power generator 16 can be reasonably mounted on the top of the inner race side stationary shaft 14 in company with the unit-type speed-increasing means 26. The torque transmission cap 24 for transmitting the rotational torque can function as a cover for protecting the power generator 16, speed-increasing means 26 and coupling 28 from the weather.

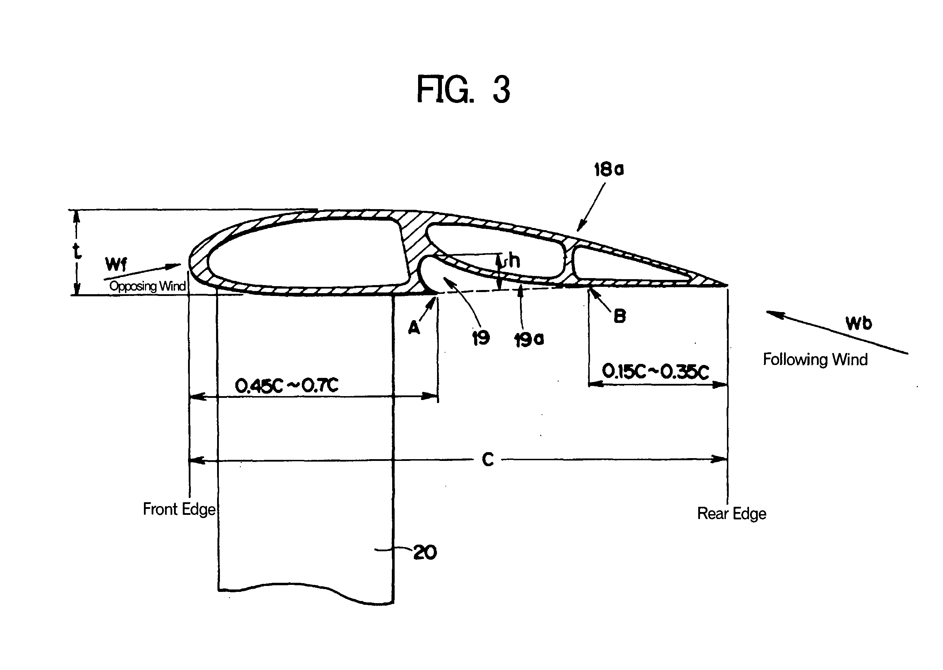

FIG 3 shows an airfoil section of the low-speed blade portion of a recurved airfoil shape having the cutout.

As shown in FIG 3, the low-speed blade portion 18a has the cutout 19 producing a large drag force by the following wind Wb in a range of circumferential velocity ratio of 1 or less. It is desirable to have the cutout 19 formed from a point (a cutout starting point A in the drawing) of 0.45C to 0.7C from the leading edge of the blade relative to a blade chord length C. Also, it is desirable to have the cutout 19 formed to a point (a cutout end point B in the drawing) of 0.15C to 0.35C from the trailing edge of the blade. The portion spreading behind the cutout end point B to the trailing edge of the blade is in a belly shape of a regular airfoil section.

Also as shown in FIG 3, the low-speed blade portion 18a is made hollow for reducing the weight of the blade. The hollow shape inside the cutout portion 19 of the low-speed blade portion 18a may be identical to the longitudinal shape of the low-speed portion 18a, so that the low-speed blade portion 18a can be formed by an extruding method.

As shown in FIG 3, the cutout portion 19 is formed in a concave shape carving toward the direction of the inner side leading edge in the blade section from the cutout starting point A so as to smoothen the flux line of a vortex flow within the cutout 19. The maximum cutout depth h of the cutout 19 may preferably be determined to 0.2t≦ h ≦ 0.7t relative to the maximum thickness of the blade t in the blade section. In the back part of the cutout 19, there is formed a boundary-layer reattachment portion 19a in a convex shape projecting outward from the maximum cutout depth point h in the cutout toward the trailing edge side of the blade 18a (toward the cutout end point B).

The maximum cutout depth point h of the cutout 19 is formed for adjusting the drag force generated by the following wind Wb in a range of circumferential velocity ratio of 1 or less in order to easily start to rotate the vertical axis wind turbine 10. The wind-receiving surface catching the following wind Wb is made wide with increasing the maximum cutout depth point h, consequently to increase the rotational torque (starting torque) in a range of circumferential velocity ratio of 1 or less. As a result, the outer race side rotor 17 of the vertical axis wind turbine 10 can advantageously start to rotate with ease.

However, if the maximum cutout depth point h is made too deep, the circumferential velocity ratio becomes 1 or more to increase the drag force exerted on the blade 18a in the lift type wind turbine, consequently to cause inconvenience of decreasing the output coefficient for the wind turbine. Since the drag force produced on the blade 18 is increased as the square of the opposing wind Wf hitting the blade 18 and the lifting force is also increased as the square of the opposing wind Wf hitting the blade 18, it is a grave challenge to decrease the drag coefficient of the blade 18 to improve the output coefficient of the vertical axis wind turbine 10.

The blade described in Patent Literature 1 (Japanese Patent Application Publication No. 2004-108330(A)) has a cutout formed in the approximate 100% part of the maximum blade thickness of the blade. However, the maximum cutout depth h of the cutout 19 in the present invention is determined to 0.2t to 0.7t relative to the maximum blade thickness t of the blade section. Hence, the blade 18a of the invention is likely decreased in drag force by 30% to 80% compared with the blade described in Patent Literature 1, so that the rotational torque performance of the blade 18a, which is obtained by subtracting a drag vector from a lift vector of the blade 18a, can be remarkably improved in comparison with the conventional blade.

Moreover, since the boundary layer separated at the cutout starting point A is reattached at a point substantially proportional to the maximum cutout depth h, the boundary layer can be surely reattached to the blade surface before the trailing edge of the blade 18a. As a result, the normal blade surface behind the boundary-layer reattachment point makes it possible to bring the air current passing through the boundary-layer reattachment point close to the regular flow condition, thereby to enable securing of the regular lifting performance.

In a case where the maximum cutout depth h is large and the wind velocity of the opposing wind Wf is fast, the separated boundary layer may possibly come at the trailing edge of the blade 18a without being reattached to the blade surface. In this case, the air current passing through the trailing edge of the blade will jumble due to a swirling air current discontinuously caused by the cutout 19, consequently to likely have a significantly adverse affect on the lifting performance of the blade. Thus, the present invention suitably stipulates the maximum cutout depth h, cutout starting point A and cutout end point B so as to allow the separated boundary layer to reattach to the blade surface in a wide region of flow velocity.

If the cutout starting point A of the cutout 19 is too close to the leading edge of the blade, the air current around the leading edge portion, which may be referred as to a blade flow starting point, is affected to severely influence subsequent air current, thereby to worsen the wind turbine performance depending on the lifting and drag characteristics of the blade when the low-speed blade portion 18a functions as a lifting type blade. Meanwhile, if the cutout starting point A of the cutout 19 comes too close to the leading edge side, the area in which the low-speed blade portion 18a and the support arm 20 are secured becomes narrow, consequently to put the support arm 20 at a structural disadvantage.

If the cutout starting point A of the cutout 19 is taken plentifully away from the leading edge of the blade, the flow around the leading edge portion, which may be referred as to a blade flow starting point, is not affected to maintain the intrinsic lifting and drag characteristics of the blade when the low-speed blade portion 18a functions as a lifting type blade. Meanwhile, if the cutout starting point A of the cutout 19 taken plentifully away from the leading edge side, the area in which the low-speed blade portion 18a and the support arm 20 are secured becomes wide, consequently to give a structural advantage to the support arm 20.

If the cutout end point B of the cutout 19 is too close to the cutout starting point A, the following wind from the trailing edge of the low-speed blade portion 18a is not sufficiently sucked in the cutout when the wind turbine starts to rotate, consequently to weaken the drag force exerting on the blade and worsen the starting performance of the wind turbine.

if the cutout end point B of the cutout 19 taken plentifully away from the cutout starting point A to come close to the trailing edge of the blade, the distance within the wind flows along the blade surface before the trailing edge of the blade becomes short to leave, around the trailing edge of the blade, countercurrent flow and vortex occurring around the cutout 19 and a turbulence flow caused by direction change of the flow or other causes at the boundary layer reattachment point, consequently to adversely affect on the flow around the trailing edge of the blade and as a result, to deteriorate the lifting performance of the blade. If the distance from the cutout end point B to the trailing edge of the blade is sufficient, the intrinsic lifting performance of the blade can be maintained while the air current along the blade surface assumes its restorative condition.

It is desirable to determine the cutout end point B in accordance with the maximum cutout depth h, the velocity of the air current along the outside of the blade 18, and the convex shape from the maximum cutout to the cutout end point B of the blade. When the cutout end point B is determined at the positions of 0.15C to 0.35C from the trailing edges of the blades to form the blade trailing edge portion in a regular airfoil-shape, the ventral flow of the blade around the trailing edge of the blade can be brought close to the regular flow condition, so that the performance of the wind turbine of the invention can be close to the intrinsic lifting performance of a standard airfoil blade.

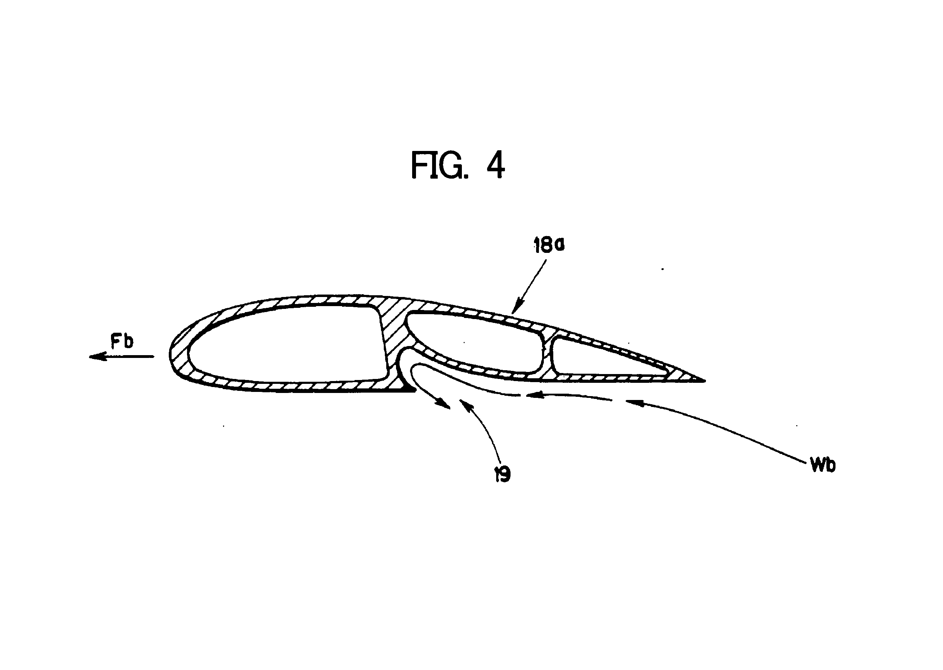

FIG 4 illustrates the state of the low-speed blade portion of the invention with its trailing edge side to the following wind Wb. As shown, when the low-speed blade portion 18a catches the following wind Wb from the trailing edge side, the wind enters the cutout 19 to produce a force Fb for carrying forward the low-speed blade portion 18a by the drag force produced within the cutout. The force Fb acts on the outer race side rotor 17 while producing a starting torque in a region of a low wind velocity ratio, thereby to rotate the outer race side rotor 17. Thus, even when the wind velocity is slow, the outer race side rotor 17 starts to rotate with ease, thereby to improve the startability of the wind turbine 10.

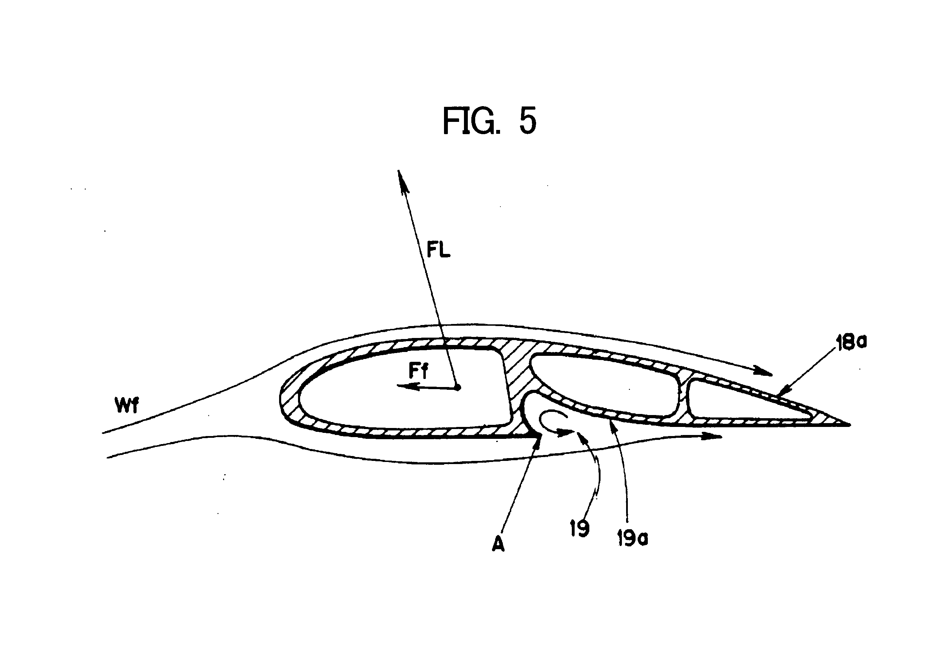

FIG 5 illustrates the state of the air current when the low-speed blade portion of a curved blade catches the opposing wind Wf at the leading edge of the blade. As shown in FIG 5, when the low-speed blade portion 18a is exposed to the opposing wind Wf from the leading edge of the blade while rotating at an increased rotational velocity, the wind hitting the leading edge of the blade is separated into the ventral surface side and the back surface side of the blade. The wind flowing along the back surface of the blade becomes negative in pressure just like the air current along the back surface of a common airfoil to produce a lifting force FL on the low-speed blade portion 18a. The lifting force FL provides an impelling force Ff for pushing the low-speed blade portion 18a, thereby to rotate the outer race side rotor 17.

The air flowing along the ventral surface of the blade to the cutout starting point A flows just the same as an air flowing around the common airfoil, but the air passing through the cutout starting point A produces a vortex flow in the cutout 19. Then, two boundary layers separated at the cutout starting point A are reattached at the boundary-layer reattachment portion 19a formed in a convex shape. After the boundary layers are reattached at the convex-shaped boundary-layer reattachment portion 19a, the air flows toward the trailing edge of the blade and again joins the air flowing along the back surface of the blade. Since the air currents stably along the airfoil ventral surface, the low-speed blade portion 18a is low in drag coefficient irrespective of presence or absence of the cutout 19 in the blade and can offer a high output coefficient as the vertical axis wind turbine.

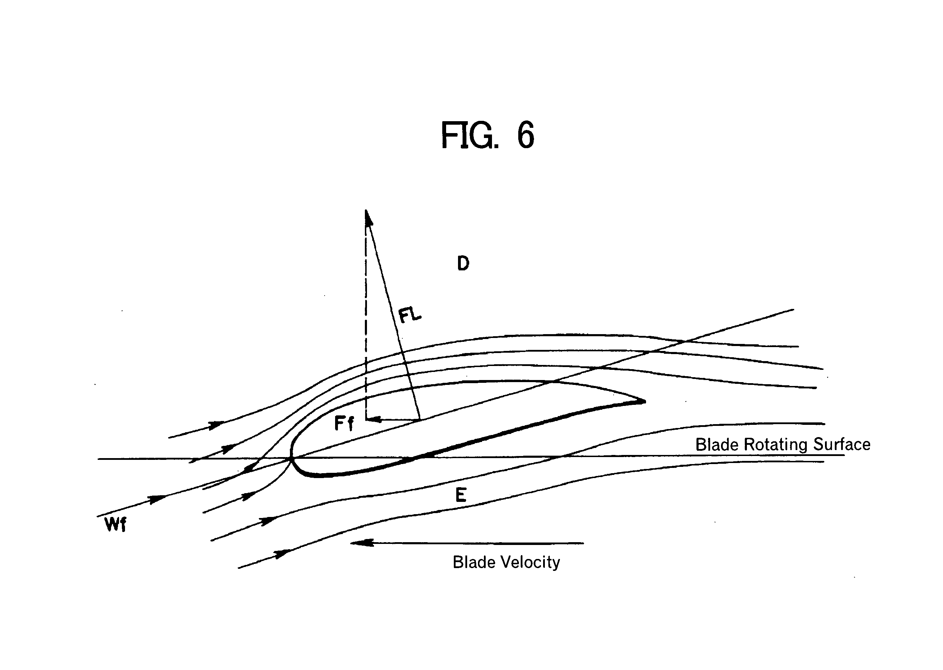

FIG 6 illustrates the air current around the curved airfoil surface of the blade. The lifting force produced by the airfoil blade as shown in FIG 6 is produced when the pressure of the air flowing along the blade back surface D is more negative in pressure than the pressure of the air flowing along the blade lower surface E. Therefore, the blade back surface and the blade ventral surface along which the main air streams flow assume a streamline shape. Since the air stream around the leading edge and the air stream flowing around the trailing edge posteriorly affect the static pressure distribution on the blade back and ventral surfaces of the blade, it is especially important to bring these air streams as close as possible to the fundamental air stream flowing along a common blade having no cutout to maintain the lifting performance in high speed rotation.

Since the low-speed blade 18a according to the invention has the cutout 19 in the ventral surface or the back surface of the airfoil blade, it is conceivable that the air current occurring around the airfoil-shaped low-speed blade 18a in low speed rotation differs from that in high speed rotation. The air currents around the airfoil blade in the cases of the high and low velocities of the following wind Wf will be considered hereinafter.

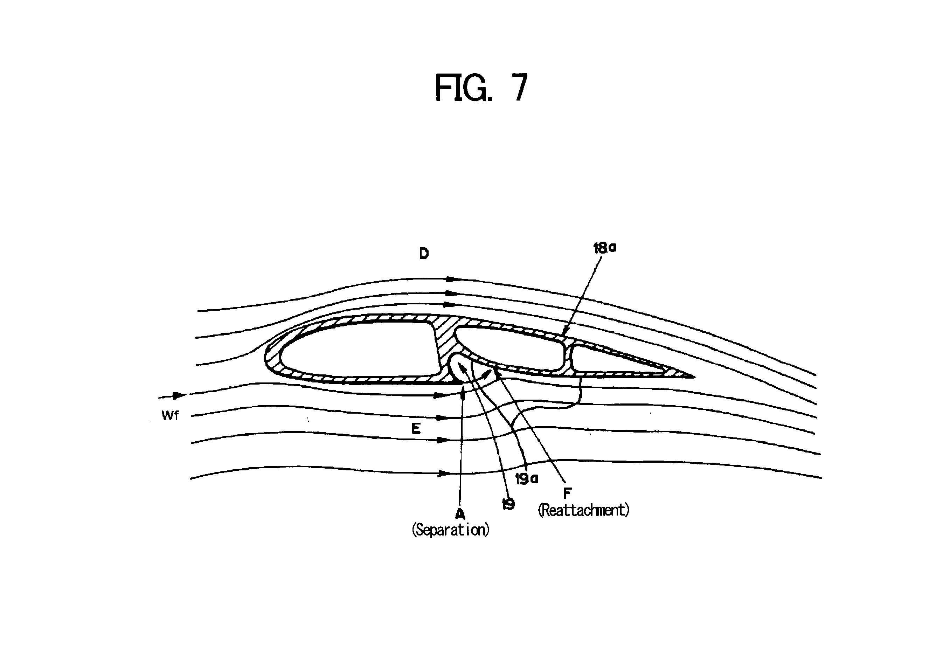

FIG 7 illustrates the air current flowing around the low-speed blade of the curved airfoil blade at a low velocity of the opposing wind Wf.

The air currents along the blade ventral surface, forming a boundary layer in the case of the low velocity of the opposing wind Wf hitting the blade 18 of the vertical axis wind turbine 10 as shown in FIG 7, but the boundary layer is expected to be separated at the point A shown in FIG 7 while slightly changing direction to the cutout 19, and then, reattached to the rear part of the airfoil blade (part F in FIG 7), thus mainly flowing along the lower surface of the blade to the trailing edge of the blade.

The reattachment of the boundary layer in a backward-facing step flow is disclosed with experimental results thereof in the conclusion section of "3. Experimental Results and Consideration" of Non-Patent Literature 1. According to this Non-Patent Literature 1, reattachment occurs at 5.5 times the level difference formed by the cutout at a primary flow velocity of 12m/sec. Since the airfoil cutout 19 in the low-speed blade 18a of the invention is not a simple level difference, it is conceivable that the separated air current is reattached within a distance 5.5 times the maximum depth h of the cutout.

The air current along the airfoil ventral surface of the blade is considered to assume a slightly curved streamline, differently from the air current occurring around a common airfoil blade having no cutout.

The lifting force is most effectively produced on the common blade having no cutout, but the primary air current along the blade ventral surface E changes in its streamline course to swerve from the basic streamline course in a case where a slightly curved air current occurs as flowing along the airfoil-shaped low-speed blade 18a of the invention. Therefore, the lifting force produced on the blade is thought to be somewhat decreased. Further, it is considered that a vortex flow occurs by an air current separated from the primary air current within the cutout 19, thereby to increase a drag force exerted against the rotating blade.

However, the airfoil-shaped low-speed blade 18a has the cutout 19 in the blade ventral surface, but the reattachment portion within the cutout 19 is formed in a convex shape (cf. boundary-layer reattachment portion 19a), so that curvature of the air current running in a streamline form along the blade ventral surface E can be lessened.

It is therefore considered that the curvature of the air current becomes large to increase occurrence of the vortex within the cutout having a concave reattachment surface as described in Patent Literature 1 showing a blade ventral surface with a largely curved cutout extending to the trailing edge of the blade. Under such circumstances, it is considered that the production of the lifting force by the blade is largely undermined. However, the airfoil shape of the low-speed blade 18a according to the invention can possibly reduce a loss of the lifting force in comparison with the airfoil shaped mentioned in Patent Literature 1.

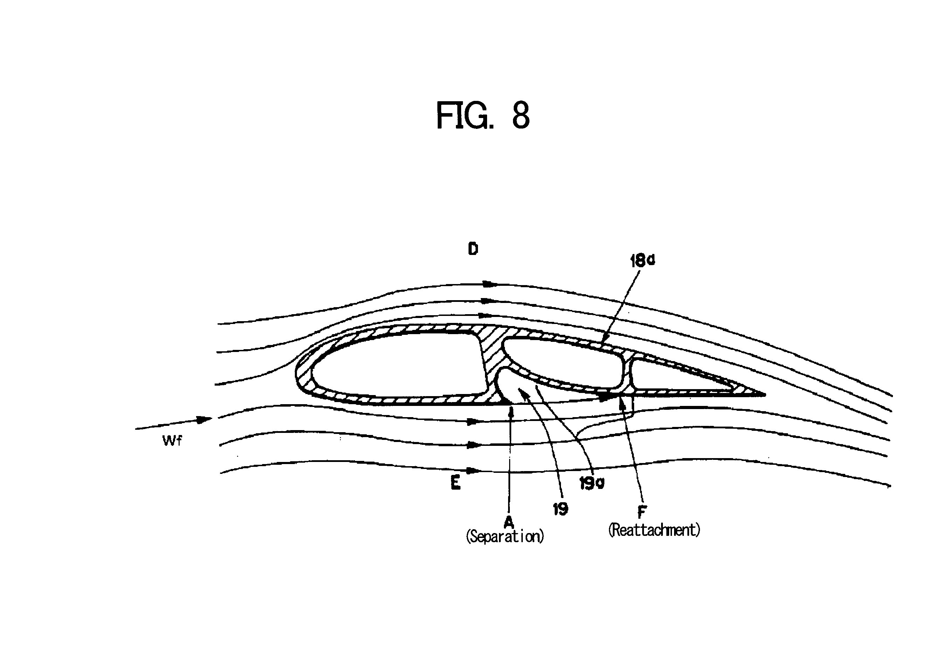

FIG. 8 illustrates the air current running around the low-speed blade portion formed in a curved airfoil shape at a high wind velocity of the opposing wind Wf.

In a case where the opposing wind Wf hits the blade 18 at high velocities, the boundary layer separated at the point C in FIG 8 is reattached to the rear portion of the blade (portion F in FIG 8), so that the air currents in a similar manner to the air current along a common blade having no cutout. Thus, it is considered that the lifting force can be produced with a small loss caused by the cutout 19, similarly to the blade without a cutout such as the cutout 19 in the invention. The boundary-layer reattachment portion in the invention is formed in a convex shape (cf. boundary-layer reattachment portion 19a), so that the distance from a portion at which the boundary layer is separated to a portion at which the boundary layer is reattached is made short.

Hence, the blade of the invention can produce the air current even at high flow velocities more efficiently than the blade having the cutout extending to the trailing edge of the lower surface of the blade as proposed in Patent Literature 1, similarly to the blade without the cutout such as the cutout 19 in the invention.

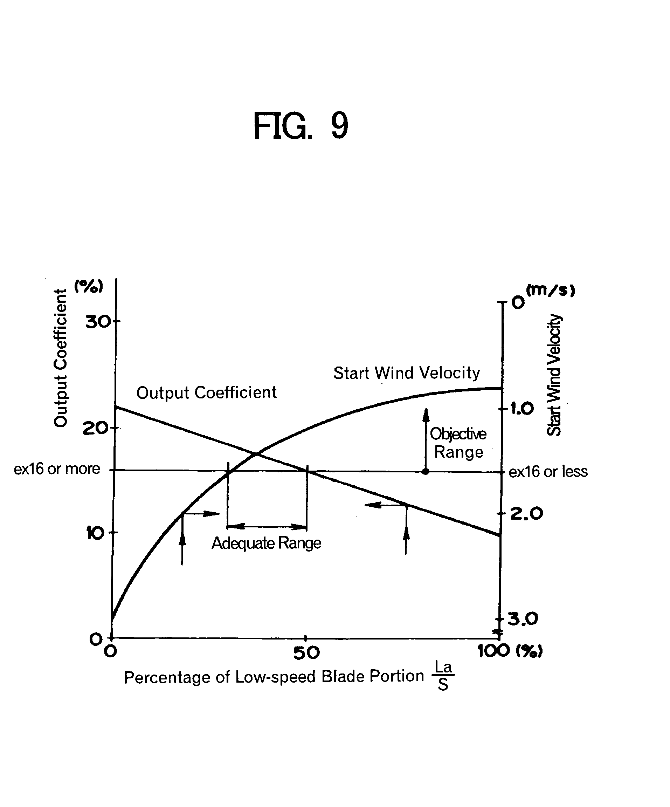

FIG 9 shows the relation among the percentage of the low-speed blade portion relative to the whole span of the blade, the output coefficient of the vertical axis wind turbine and the starting wind velocity.

As shown in FIG 9, in a case where the percentage of the low-speed blade portion 18a is small (a case of setting the percentage to the value close to 0%), the output coefficient at the optimum circumferential velocity rate indicates its high value, but the starting wind velocity becomes high because the starting of the vertical axis wind turbine is dependent on the lifting force WL of the high-speed blade 18b to a great extent. Thus, the blade does not rotate at the low velocity of the opposing wind Wf, consequently to disable electric power generation at a low wind velocity, and further bring about discontinuation of the wind turbine for a long time despite the blowing wind although it is weak, consequently to lose reason for the existence of the wind turbine and leave poor impression of the wind turbine.

When the low-speed blade portion 18a is formed at a high component ratio (set to be close to 100%) to decelerate the starting wind velocity of the wind turbine, the startability of the vertical axis wind turbine, but it is liable to decrease the output coefficient at the optimum circumferential velocity rate. Thus, as shown in the same drawing, it is desirable to determine the length of the low-speed blade portion 18a and the maximum depth h of the cutout so as to fall within an adequate range determined on the basis of an annual average wind velocity at the installation site of the vertical axis wind turbine. In the illustrated embodiment in the same drawing, the adequate range is determined to be 16% or more in output coefficient and 1.6m/s or less in starting wind velocity.

FIG 1 illustrates the embodiment using the airfoil low-speed blade portion 18a with the convex boundary layer reattachment portion protruding outside the trailing edge of the blade from the point of the maximum depth h of the cutout 19, but it may be formed like the low-speed blade having a cutout extending to the blade trailing edge in the ventral surface or back surface of the blade as described in Patent Literature 1 (Japanese Patent Application Publication No. 2004-108330(A)).

When the blade is partially formed in the airfoil shape as described in Patent Literature 1, high startability at a low circumferential velocity rate can be expected, but the drag force exerted on the blade is substantially increased at a high circumferential velocity rate. However, even when using the airfoil-shaped blade, the wind turbine makes it possible to ensure the output coefficient as a lift type wind turbine while maintaining the startability of the vertical axis wind turbine by being designed so as to reduce the occupancy of the low-speed blade portion and increase the occupancy of the high-speed blade portion in the blade.

Further, by forming both the low-speed blade portion having the cutout in the ventral surface or back surface of the airfoil-shaped blade and the high-speed blade portion having a common blade section with no cutout in the same airfoil shape with respect to other parts than the cutout, the low-speed blade portion, the high-speed blade portion and support arm 20 can easily be standardized in their joint structure, thus allowing for introduction of inexpensive joint modules while adapting to a unified design without spoiling the aesthetic design of the wind turbine. The adoption of the joint modules can provide a wind turbine with high output efficient, capable of easily starting and being produced at a moderate price.

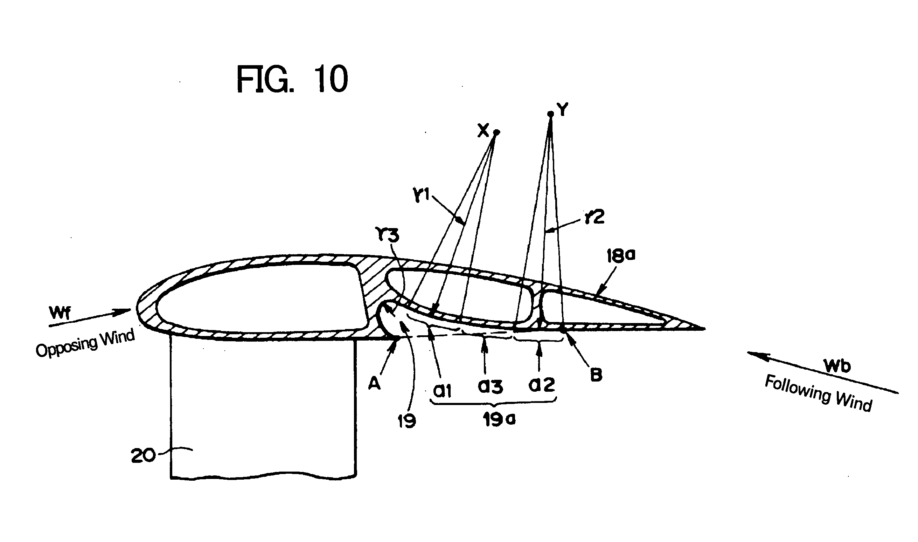

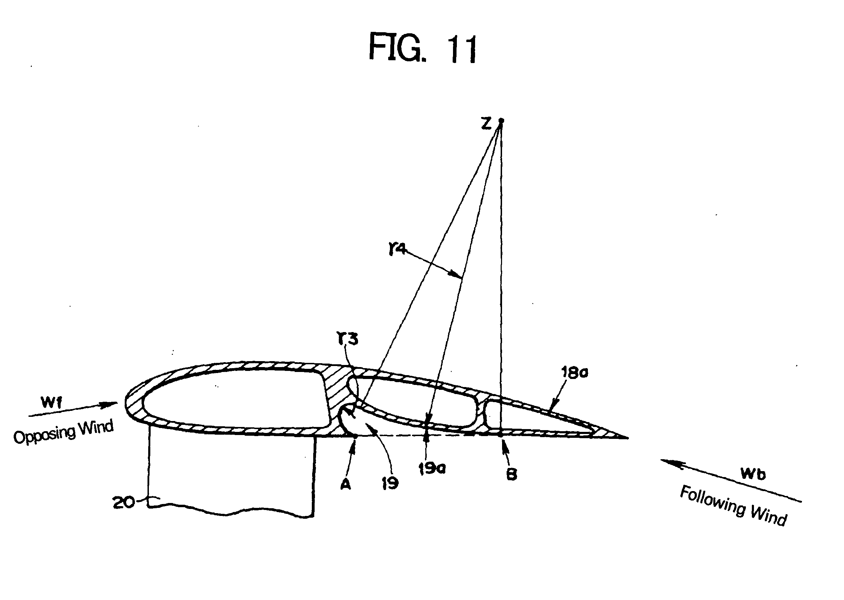

FIG 10 and FIG 11 illustrate the curved blade having the low-speed blade portion 18a and the boundary-layer reattachment portion 19a. Specifically, the low-speed blade portion 18a including a straight part a3 in the boundary layer reattachment portion 19a is shown in section in FIG 10.

The boundary layer reattachment portion 19a in the embodiment shown in FIG 10 comprises an arcuate part a1 having a circular arc with radius r1, an arcuate part a2 having a circular arc with radius r2, and a straight part a3 defined between the arcuate part a1 and the arcuate part a2. The junction parts for connecting the arcuate part al, arcuate part a2 and straight part a3 may be made continuous.

The locations of the arc center X of the arcuate part, the arc center Y of the arcuate part, radius r2, radius r2 and the dimensions of straight part a3 may be adequately determined on the basis of the distance between the blade leading edge and the cutout starting point A, distance between the cutout end point B and the blade trailing edge, the maximum cutout depth h, and the radius r3 inside the cutout 19 so as to make the air current along the ventral surface of the blade smooth when the boundary layer separated at the cutout starting point A is reattached to the boundary layer reattachment portion 19a. Although the boundary layer reattachment portion is formed by combining the curves and straight, the curved surface may be composed by joining together straight surfaces.

FIG 11 shows in section the airfoil section of the low-speed blade portion 18a having no straight portion of a boundary-layer reattachment portion 19a having a circular arc with radius r4.

The center Z of the arc and the radius r4 may be determined on the basis of the distance between the blade leading edge and the cutout starting point A, distance between the cutout end point B and the blade trailing edge, the maximum cutout depth h, and the radius r3 inside the cutout 19 so as to make the air current along the ventral surface of the blade smooth when the boundary layer separated at the cutout starting point A is reattached to the boundary layer reattachment portion 19a.

Although the entire surface of the boundary layer reattachment portion 19a in the embodiment shown in FIG 10 and FIG 11 is formed in the shape containing the convex shape protruding outside or the straight portion in part, it may be made by adding the straight portion to the other parts or having a concave shape within the boundary layer reattachment portion 19a to achieve the object of the invention.

The boundary layer reattachment portion 19a thus formed makes it possible to bring the air current beyond the reattachment point close to a normal flowing state, consequently to gain a regular lifting performance of a standard blade.

Next, the second embodiment of the vertical axis wind turbine and the blade therefor according to the invention will be described.

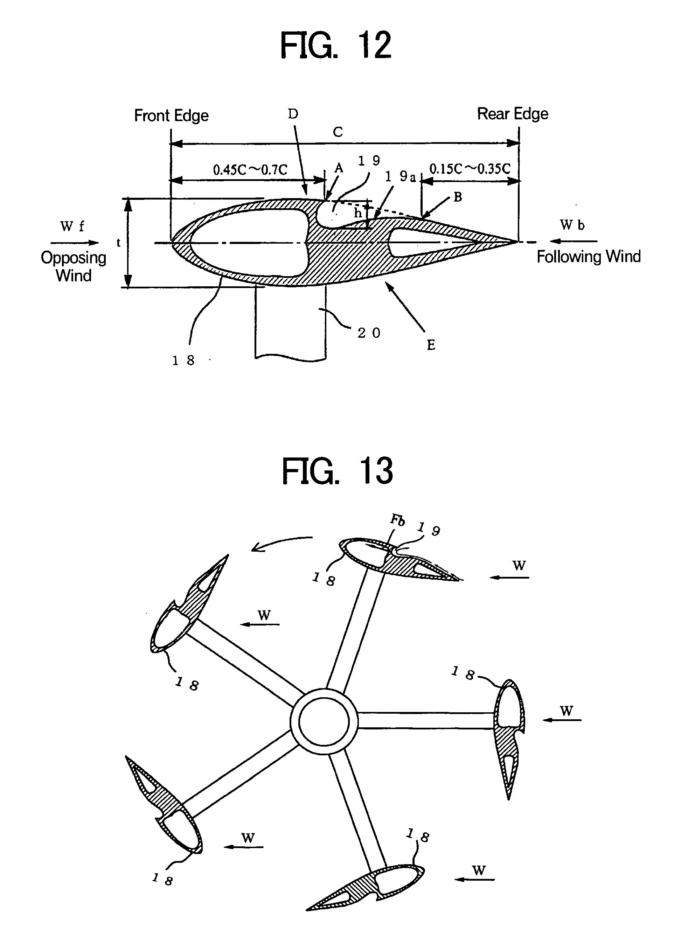

FIG 12 shows in section the airfoil-shaped blade for low-speed rotation. The blade of a symmetrical airfoil type having symmetric back and ventral surfaces with a cutout formed in the back surface of the low-speed blade portion is illustrated in FIG 12. As shown in FIG 12, the low-speed blade portion 18a has the cutout 19 for producing a large drag force by the following wind Wb with a circumferential velocity ratio of 1 or less.

As one example, the cutout 19 may desirably open from the position of 0.45C to 0.7C from the leading edge of the blade or a blade chord length C (cutout starting point A in FIG 12). Further, the cutout 19 may desirably open to the position of 0.15C to 0.35C from the trailing edge of the blade (cutout end point B in FIG 12). The regular airfoil section is left from the cutout end portion B to the trailing edge of the blade. The forming position of the cutout 19 is not limited thereto.

The maximum depth h of the cutout 19 is desirable determined to 0.2t ≦ h ≦ 0.7t relative to the maximum thickness of the blade t in the blade section. In the back part of the cutout 19, there is formed a boundary-layer reattachment portion 19a in a convex shape projecting outward from the maximum cutout depth point h in the cutout toward the trailing edge side of the blade 18a (toward the cutout end point B).

FIG 13 shows the state in which the blade with the cutout in the back side of a symmetrical airfoil blade of the invention produces a starting torque. As shown in FIG 13, when the wind W blows in the prescribed direction, one of the blades 18 catches the following wind to produce an impelling force Fb as a rotational force, thereby to produce a starting torque. When the other blade comes to the same position, it catches the following wind to produce the impelling force Fb likewise. The cutout 19 is not resistance at the other positions.

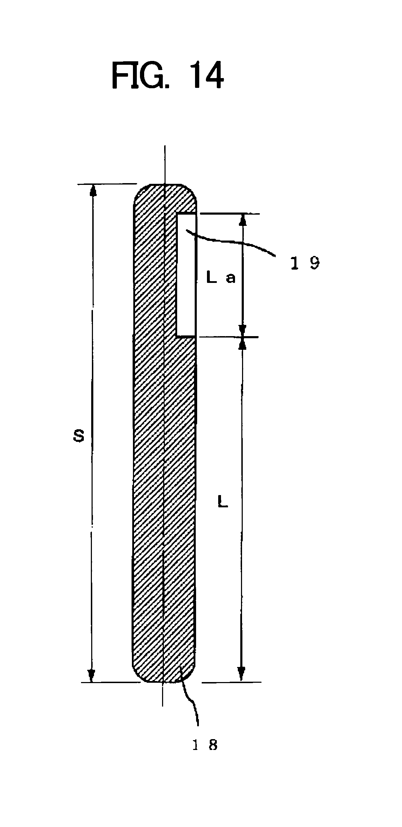

FIG 14 is the sectional view of the blade 18 taken in its central span direction. As illustrated in FIG 14, the cutout 19 having a length La in this embodiment is disposed above the blade 18 at the position of L from the lower edge. The position of the cutout 19 in the longitudinal direction is not limited thereto. It may be formed at the other positions, that is, beneath the blade 18.

Accordingly, the blade 18 of the vertical axis wind turbine according to the invention, which has the back surface far from the rotational shaft and the ventral surface being symmetric to the back surface and close to the side of the rotational shaft of the vertical axis wind turbine, which surfaces are symmetric, is featured by the cutout 19 formed in the back surface of the blade 18 and the boundary-layer reattachment portion formed in a convex shape projecting outward from the maximum cutout depth point in the cutout 19 toward the trailing edge side of the blade 18 of the vertical axis wind turbine.

Therefore, since the back surface of the blade is larger in radius of gyration than the ventral surface of the blade to increase the starting torque brought about by the cutout, the self-startability of the vertical axis wind turbine can be improved without restricting the forming position of the cutout 19 by the support arm 10. Besides, the invention can open up the option to manufacture the wind turbine and lower the cost of production of the wind turbine.

### INDUSTRIAL APPLICABILITY

Accordingly, the present invention can provide a vertical axis wind turbine capable of ensuring self-startability of a practicable level in weak wind conditions while substantially maintaining the output coefficient as of a lift type wind turbine and producing an excellent torque coefficient to be large in power generation performance in a wide range of operating wind velocity, Further, according to the present invention, these characteristic features can be fulfilled by the structure capable of being manufactured at a low cost as noted above.

## Claims

1. A blade for a vertical axis wind turbine, featured by providing a cutout in the airfoil-shaped ventral surface or back surface of the blade of the vertical axis wind turbine and forming a boundary-layer reattachment portion in a convex shape projecting outward from the maximum cutout depth point in the cutout toward the trailing edge side of the blade.

2. A blade for a vertical axis wind turbine, featured by providing a cutout in the airfoil-shaped ventral surface or back surface of the blade having the maximum blade thickness t of a vertical axis wind turbine, said maximum blade depth of said cutout being set to 0.2t to 0.7t, and forming a boundary-layer reattachment portion in a convex shape projecting outward from the maximum cutout depth point in said cutout toward the trailing edge side of the blade.

3. A blade for a vertical axis wind turbine, featured by providing a cutout having a starting point at the position of 0.45C to 0.7C from the leading edge of the blade in the airfoil-shaped ventral surface or back surface of the blade having a blade chord length C of a vertical axis wind turbine, and forming a boundary-layer reattachment portion in a convex shape projecting outward from the maximum cutout depth point in said cutout toward the trailing edge side of the blade.

4. A blade for a vertical axis wind turbine, featured by providing a cutout having a cutout end point at the position of 0.15C to 0.35C from the trailing edge of the blade in the airfoil-shaped ventral surface or back surface of the blade having a blade chord length C of a vertical axis wind turbine, and forming a boundary-layer reattachment portion in a convex shape projecting outward from the maximum cutout depth point in said cutout toward the trailing edge side of the blade.

5. A blade for a vertical axis wind turbine, featured in that the blade of a vertical axis wind turbine is composed of a low-speed blade portion having a cutout in the airfoil-shaped ventral surface or back surface of the blade and a normal high-speed blade portion having no cutout.

6. A blade for a vertical axis wind turbine, featured in that the blade of a vertical axis wind turbine is composed of a low-speed blade portion having a cutout in the airfoil-shaped ventral surface or back surface of the blade and a boundary-layer reattachment portion in a convex shape projecting outward from the maximum cutout depth point in said cutout toward the trailing edge side of the blade, and a normal high-speed blade portion having no cutout.

7. A vertical axis wind turbine featured by providing the blades as claimed in any of claims 1 to 6.
